# EUROPÄISCHE PATENTSCHRIFT

(11) **EP 1 375 213 B1**
(45) Veröffentlichungstag und Bekanntmachung des Hinweises auf die Patenterteilung: **22.02.2006**
(21) Anmeldenummer: 03010884.9
(22) Anmeldetag: 15.05.2003
(51) Int. Cl.: B60H 1/08, B60H 1/10, F01P 7/16

(54) **Verfahren zum Betrieb eines Kühl- und Heizkreislaufs eines Kraftfahrzeugs**
Method for operating a cooling- and heating circuit of a motor vehicle
Méthode de contrôle d'un circuit de refroidissement et chauffage de véhicule à moteur

(30) Priorität: 26.06.2002 DE 10228495
(43) Veröffentlichungstag der Anmeldung: 02.01.2004
(73) Patentinhaber: ROBERT BOSCH GMBH, 70442 Stuttgart (DE)
(72) Erfinder: Huelser, Holger, 8010 Graz (AT)

(56) Entgegenhaltungen:
- EP-A- 0 965 737
- DE-A- 3 738 412
- US-A- 4 391 407
- US-B1- 6 394 045

## Beschreibung

### Stand der Technik

Die Erfindung geht von einem Verfahren zum Betrieb eines Kühl- und Heizkreislaufs eines Kraftfahrzeugs nach dem Oberbegriff des Anspruchs 1 aus.

Eine Brennkraftmaschine eines Kraftfahrzeugs arbeitet unter sehr unterschiedlichen klimatischen Bedingungen und stark schwankenden Belastungen. Um trotzdem die Temperatur der Brennkraftmaschine in engen Grenzen zu halten, wird diese von einem Kühlmittel durchströmt. Die Temperatur des Kühlmittels wird aufgrund von Betriebs- und Umgebungsparametern geregelt, so dass der Brennkraftmaschine je nach Bedarf entweder Wärme zugeführt oder überschüssige Wärme abgeführt wird. Der Kühlmittelkreislauf wird in zunehmendem Maße durch eine Steuereinheit kontrolliert, an der außerdem Komponenten eines Heizkreislaufs und/oder einer Klimaanlage des Kraftfahrzeugs angeschlossen sind. Dabei arbeitet die zentrale Regelung nach dem Prinzip der bedarfsgerechten Zuteilung anfallender Wärmeströme in den benannten Kreisläufen.

Aus der DE 37 38 412 A1 ist eine Vorrichtung und ein Verfahren zur Regelung der Temperatur einer Brennkraftmaschine bekannt. Das Kühlmittel zirkuliert in einem Kühlkreislauf, der aus mehreren Kühlmittelwegen besteht. Ein erster Kühlmittelweg führt über eine Bypassleitung, ein zweiter Kühlmittelweg über einen Hauptkühler der Brennkraftmaschine und ein dritter Kühlmittelweg über einen Heizungswärmetauscher, der zum Klimatisieren eines Fahrgastraums dient. Die Kühlmittelverteilung übernehmen elektrisch betätigte Ventile, wobei ein erstes zwischen der Bypassleitung und dem Kühlmittelweg zum Hauptkühler und ein zweites zwischen der Bypassleitung und dem Kühlmittelweg zum Heizungswärmetauscher angeordnet ist.

Zudem sind in dem Kühlkreislauf eine von der zu kühlenden Brennkraftmaschine angetriebene, mechanische Pumpe und eine in Reihe geschaltete, elektrisch angetriebene Pumpe angeordnet. Beim Transport des Kühlmittels übernimmt die mechanische Pumpe eine Grundlast, während die Förderleistung der elektrischen Pumpe steuerbar ist. Zur Steuerung der Ventile und der elektrischen Pumpe ist eine Steuereinheit vorgesehen, der als Eingangssignale Betriebs- und Umgebungsparameter der Brennkraftmaschine zugeführt werden, wie beispielsweise die Drehzahl und die Temperatur der Brennkraftmaschine, der Druck und die Temperatur des Kühlmittels, aber auch die Temperatur der Umgebungsluft und des Fahrgastraums. Die Steuereinheit verarbeitet diese Informationen zu Ausgangssignalen, welche Stellgrößen für die Ventile und die elektrische Pumpe bilden.

Nach Inbetriebnahme der Brennkraftmaschine beginnt die mechanische Pumpe mit dem Fördern des Kühlmittels. Die Förderleistung hängt von der Drehzahl der Brennkraftmaschine ab und ist auf einen Wert fest einstellbar, der aber zur erforderlichen Kühlmittelförderleistung nicht ausreicht und durch die Leistung der elektrischen Pumpe ergänzt wird.

Bei einem Kaltstart strömt das Kühlmittel über die Bypassleitung sofort zur Brennkraftmaschine zurück. Dieser kleine Kreislauf bringt nahezu keine Kühlleistung auf, so dass die Brennkraftmaschine möglichst schnell die Betriebstemperatur erreicht und der Kraftstoffverbrauch vorteilhafterweise reduziert wird. Beim Ansteigen der Kühlmitteltemperatur öffnet das erste Ventil den zweiten Kühlmittelweg mit dem Hauptkühler, der je nach Bedarf mit einer Jalousie und einem Gebläse zusammenarbeitet und dem Kühlmittel überschüssige Wärme entzieht. Außerdem wird ein Anpassen der Kühlleistung durch Verändern des Kühlmittelstroms der elektrischen Pumpe erreicht.

Eine weitere Möglichkeit, Wärme aus dem Kühlkreislauf abzuführen, besteht durch die Freigabe des dritten Kühlmittelwegs, wobei ein Teil des Kühlmittelstroms über den Heizungswärmetauscher geleitet wird und beispielsweise zum Beheizen des Fahrgastraums dienen kann. Reicht die Kühlleistung des Heizungswärmetauschers aus, so kann der Kühlmittelweg mit dem Hauptkühler auch vollständig gesperrt werden. Die überschüssige Wärme wird in diesem Betriebszustand ausschließlich in den Fahrgastraum geleitet, was besonders bei niedrigen Außentemperaturen sinnvoll ist. Während der Aufwärmphase der Brennkraftmaschine wird die bei der Verbrennung entstehende Wärme jedoch hauptsächlich der Brennkraftmaschine wieder zugeführt und der Kühlmittelstrom über den Heizungswärmetauscher ist stark reduziert oder sogar gesperrt, so dass in dieser Zeit nur eine geringe oder gar keine Energie dieser Wärmequelle zum Heizen des Fahrgastraums vorhanden ist.

### Vorteile der Erfindung

Nach der Erfindung stellt die Steuereinheit an der Pumpe einen höheren Volumenstrom ein, wenn der Fahrer eine Sollwertvorgabe für einen Wärmeeintrag in den Fahrgastraum einstellt. Die Sollwertvorgabe des Fahrers bildet somit ein Eingangssignal, aufgrund dessen der Kühlmittelvolumenstrom durch die Brennkraftmaschine variiert wird. Dabei ist ein geringer Kühlmittelvolumenstrom vorgesehen, wenn der Fahrer an der Bedienungseinrichtung einer Heizung oder einer Klimaanlage vorgibt, dass er keine Heizung des Fahrgastraums wünscht. In diesem Fall heizt sich die Brennkraftmaschine in der Warmlaufphase relativ schnell auf. Nach dem Erreichen der optimalen Betriebstemperatur ist dann ein minimaler Kühlmittelvolumenstrom vorgesehen, der gerade noch ausreicht, die überschüssige Wärme der Brennkraftmaschine über den Hauptkühler abzuführen und die Temperaturdifferenz innerhalb der Brennkraftmaschine auf ein bestimmtes Maß zu begrenzen.

Gibt der Fahrer an der Bedienungseinrichtung aber vor, dass er einen Wärmeeintrag in den Fahrgastraum wünscht, ist vorgesehen, den Kühlmittelvolumenstrom durch die Brennkraftmaschine im Vergleich zum vorherigen Fall zu erhöhen. Jetzt wird die bei der Verbrennung des Kraftstoffs entstehende Wärme optimal zwischen den beiden Zwecken, schnelles Aufheizen der Brennkraftmaschine zum Erzielen eines geringen Kraftstoffverbrauchs und schnelles Aufheizen des Fahrgastraums zum Erreichen einer angenehmen Temperatur, aufgeteilt, wodurch die Brennkraftmaschine die Betriebstemperatur allerdings etwas langsamer erreicht. Der größere Kühlmittelvolumenstrom bleibt auch bei Betriebstemperatur eingestellt, so dass die Wärmezufuhr in den Fahrgastraum weiterhin erhöht ist und eine vom Fahrer gewünschte Temperatur schneller erreicht wird. Der erhöhte Wärmeeintrag in den Fahrgastraum verbessert den Komfort und führt gleichzeitig zu einer erhöhten Fahrsicherheit, wenn beispielsweise Wärme zum Enteisen der Fahrzeugscheiben bereit gestellt werden kann.

Die Größe des Kühlmittelvolumenstroms überwacht eine Steuereinheit, welche in einer ersten Ausgestaltung von der Bedienungseinrichtung ein Signal erhält, sobald der Fahrer den Wunsch nach einem Wärmeeintrag in den Fahrgastraum einstellt. Zudem ist in der Steuereinheit ein Wert für einen Mindestvolumenstrom abgelegt, der für ein komfortables Beheizen des Fahrgastraums erforderlich ist. Das Steuerprogramm der Steuereinheit wählt zwischen dem Mindestvolumenstrom und dem zur Kühlung der Brennkraftmaschine erforderlichen volumenstrom den größeren aus und stellt ihn über eine Steuereinrichtung an der Pumpe ein, wenn das Signal von der Bedienungseinrichtung gesendet wird.

In einer weiteren Ausgestaltung der Erfindung wird von der Bedienungseinrichtung ein Signal an die Steuereinheit übertragen, das um so größer ist, je größer der gewünschte Wärmeeintrag in den Fahrgastraum ist. In diesem Fall ist in der Steuereinheit ein Schwellenwert und ein Wert für einen Mindestvolumenstrom abgelegt. Das Steuerprogramm fordert über die Steuereinrichtung der Pumpe jetzt den größeren der beiden Volumenströme, wenn das Signal größer oder gleich dem Schwellenwert ist. Überdies ist es möglich, die Größe des Kühlmittelvolumenstroms mit Hilfe einer Kennlinie einzustellen, die in der Steuereinheit abgelegt ist. Über diese Kennlinie und über ein Signal der Bedienungseinrichtung zu einem Wärmeeintrag in den Fahrgastraum ermittelt das Steuerprogramm einen Mindestvolumenstrom, wobei es der Pumpe über die Steuereinrichtung wiederum den größeren der beiden Volumenströme vorgibt, wenn ein Signal von der Bedienungseinrichtung vorliegt.

Damit die Temperaturdifferenz innerhalb der Brennkraftmaschine auf ein bestimmtes Maß begrenzt bleibt, ist im Steuerprogramm vorgesehen, erst dann einen größeren Volumenstrom an die Steuereinrichtung der Pumpe vorzugeben, wenn eine durch einen Temperatursensor gemessene Temperatur des Kühlmittels am Ausgang der Brennkraftmaschine einen Schwellenwert überschreitet. Dieser Schwellenwert kann beispielsweise bei einer Temperatur von 25 C° liegen, so dass berücksichtigt ist, erst dann Wärme in den Fahrgastraum zu leiten, wenn die Temperatur des Kühlmittels nicht zu gering ist.

### Zeichnung

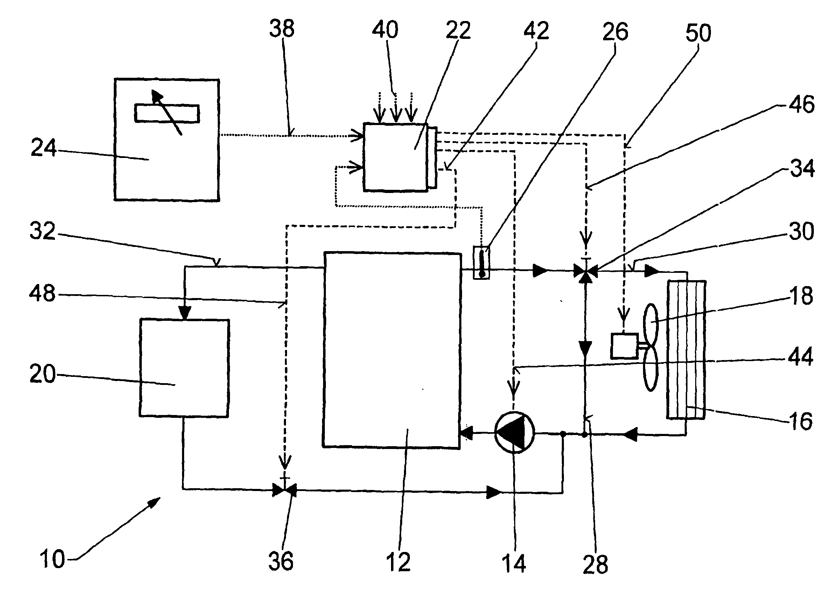

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Die einzige Zeichnung zeigt eine schematische Darstellung eines Kühl- und Heizungskreislaufs eines Fahrzeugs.

### Beschreibung der Ausführungsbeispiele

Eine Brennkraftmaschine 12 ist an einem Kühl- und Heizungskreislauf 10 angeschlossen, in dem eine Pumpe 14 ein Kühlmittel fördert. Die Pumpe 14 kann eine von einem regelbaren Elektromotor angetriebene Pumpe oder eine mechanisch angetriebene Pumpe sein, welche eine Einrichtung zum Einstellen der Fördermenge aufweist. Sie fördert das Kühlmittel von der Brennkraftmaschine 12 über einen ersten Kühlmittelweg 28, eine Bypassleitung, direkt zur Brennkraftmaschine 12 zurück. Über den Kühlmittelweg 28 wird dem Kühlmittel nur sehr wenig Wärme entzogen, so dass die Brennkraftmaschine 12 schnell eine optimale Betriebstemperatur erreicht und bei geringer Schadstoffemission weniger Kraftstoff verbraucht. Parallel zur Bypassleitung 28 ist ein zweiter Kühlmittelweg 30 zu einem Hauptkühler 16 vorgesehen, der mit einem Lüfter 18 zusammenarbeitet und dem Kühlmittel überschüssige Wärme entzieht. Ein erstes Regelventil 34, das an der Abzweigung des zweiten Kühlmittelwegs 30 angeordnet ist, verteilt den Kühlmittelstrom auf den Kühler 16 und/oder die Bypassleitung 28. Das Regelventil 34 kann als 3-Wege-Ventil oder in Form von zwei 2-Wege-Ventilen ausgeführt sein. Als Ventilart kann ein elektrisch betriebenes Proportionalventil eingesetzt werden.

Über einen dritten Kühlmittelweg 32 strömt das Kühlmittel von der Brennkraftmaschine 12 zu einem Heizungswärmetauscher 20 und von dort zur Brennkraftmaschine 12 zurück. Der Heizungswärmetauscher 20 dient dazu, Wärme vom Kühlmittel in den Fahrgastraum zu übertragen. Damit der Kühlmittelstrom durch den Heizungswärmetauscher 20 definiert reduziert werden kann, ist im Kühlmittelweg 32 optional ein zweites Regelventil 36 vorgesehen. Das erfindungsgemäße Verfahren ist aber nicht auf das Ventil 36 angewiesen.

Die Kühlmittelströme werden mit Hilfe einer Steuereinheit 22 geregelt. Dazu empfängt die Steuereinheit 22 Daten über direkte Signalleitungen oder über einen Datenbus, beispielsweise CAN (Control Area Network), und verarbeitet diese zu Vorgaben an die Stelleinrichtungen des Kühlmittelkreislaufs, die in Form eines PWM-Signals oder über den CAN-Bus gesendet werden. Als Eingangssignale 40 werden der Steuereinheit 22 Betriebs- und Umgebungsparameter der Brennkraftmaschine 12 zugeführt, wie beispielsweise die Drehzahl, die Last und die Temperatur der Brennkraftmaschine 12, die Geschwindigkeit des Fahrzeugs sowie die Temperatur der Umgebungsluft und des Fahrgastraums. Die Temperatur des Kühlmittels wird von einem Temperatursensor 26 erfasst, der im Kühlmittelkreislauf am Ausgang der Brennkraftmaschine 12 angeordnet ist, und in Form eines Eingangssignals 42 ebenfalls zur Steuereinheit 22 übertragen.

Nach einer Auswertung sendet die Steuereinheit 22 ein Ausgangssignal 44 zu einer Steuerungseinrichtung der Pumpe 14, wodurch deren Förderleistung und somit die Größe des Kühlmittelvolumenstroms im Kühl- und Heizkreislauf 10 bestimmt wird. Die Ausgangssignale 46 und 48 steuern die Stellung der Regelventile 34, 36 und bestimmen die Aufteilung der Kühlmittelströme auf die entsprechenden Kühlmittelwege 28, 30, 32. Das Ausgangssignal 50 bestimmt die Leistung des Lüfters 18, der beispielsweise die Wärmeabfuhr über den Hauptkühler 16 verbessert, wenn die Temperatur des Kühlmittels sehr hoch ist.

Zu den bereits beschriebenen Eingangssignalen 40, 42 wird eine Sollwertvorgabe 38 in das Steuerungsprogramm der Steuereinheit 22 einbezogen. Die Sollwertvorgabe 38 entspricht einem Wunsch eines Fahrers nach einem Wärmeeintrag in den Fahrgastraum, der an einer Bedienungseinrichtung 24 einer Heizung 20 oder einer Klimaanlage beispielsweise von dem Fahrer eingestellt wird. Entsprechend der Sollwertvorgabe 38 bestimmt die Steuereinheit 22 in einer ersten Ausführung der Erfindung einen Mindestvolumenstrom, der für ein komfortables Beheizen des Fahrgastraums erforderlich ist, und vergleicht diesen mit einem Wert, der im Speicher der Steuereinheit 22 abgelegt ist, und der zur Kühlung der Brennkraftmaschine 12 erforderlich ist. Sie wählt den größeren Wert aus und stellt den entsprechenden Volumenstrom über das Ausgangssignal 44 an der Pumpe 14 ein.

In einer weiteren Ausgestaltung wählt die Steuereinheit 22 zwischen dem Mindestvolumenstrom und dem zur Kühlung der Brennkraftmaschine 12 erforderlichen Volumenstrom den größeren aus und stellt diesen an der Pumpe 14 ein, wenn die Sollwertvorgabe 38 einen in der Steuereinheit 22 abgelegten Schwellenwert überschreitet. Nach einer weiteren Ausgestaltung ermittelt die Steuereinheit 22 den Mindestvolumenstrom in Abhängigkeit der Größe der Sollwertvorgabe 38 mittels einer Kennlinie, die in diesem Fall im Speicher der Steuereinheit 22 abgelegt ist, und vergleicht ihn mit dem Mindestvolumenstrom für die Kühlung der Brennkraftmaschine 12.

### Bezugszeichen

- 10: Kühl- und Heizkreislauf
- 12: Brennkraftmaschine
- 14: Pumpe
- 16: Hauptkühler
- 18: Lüfter
- 20: Heizungswärmetauscher
- 22: Steuereinheit
- 24: Bedienungseinrichtung
- 26: Temperatursensor
- 28: erster Kühlmittelweg
- 30: zweiter Kühlmittelweg
- 32: dritter Kühlmittelweg
- 34: erstes Regelventil
- 36: zweites Regelventil
- 38: Sollwertvorgabe
- 40: Eingangssignal
- 42: Eingangssignal
- 44: Ausgangssignal
- 46: Ausgangssignal
- 48: Ausgangssignal
- 50: Ausgangssignal

## Patentansprüche

1. Verfahren zum Betrieb eines Kühl- und Heizkreislaufs (10) eines Kraftfahrzeugs, das von einer Brennkraftmaschine (12) angetrieben wird, wobei ein erster Kühlmittelweg (28) über eine Bypassleitung, ein zweiter Kühlmittelweg (30) über einen Hauptkühler (16) der Brennkraftmaschine (12) und ein dritter Kühlmittelweg (32) über einen Heizungswärmetauscher (20) führt, und die Kühlmittelströme durch elektrisch betätigte Ventile (34, 36) aufgeteilt und durch mindestens eine elektrisch angetriebene Pumpe (14) bestimmt werden, indem eine elektronische Steuereinheit (22) sowohl die Ventile (34, 36) als auch die Pumpe (14) in Abhängigkeit von Betriebs- und Umgebungsparametern (40, 42) sowie Sollwertvorgaben (38) ansteuert, **dadurch gekennzeichnet, dass** die Steuereinheit (22) an der Pumpe (14) einen höheren Volumenstrom einstellt, wenn der Fahrer eine Sollwertvorgabe (38) für einen Wärmeeintrag in den Fahrgastraum einstellt.

2. Verfahren nach Anspruch 1, **dadurch gekennzeichnet, dass** in der Steuereinheit (22) ein Wert für einen Mindestvolumenstrom abgelegt ist, der für ein komfortables Beheizen des Fahrgastraums erforderlich ist, und dass die Steuereinheit (22) zwischen dem Mindestvolumenstrom und dem zur Kühlung der Brennkraftmaschine (12) erforderlichen Volumenstrom den größeren auswählt und an der Pumpe (14) einstellt.

3. Verfahren nach Anspruch 2, **dadurch gekennzeichnet, dass** die Steuereinheit (22) zwischen dem Mindestvolumenstrom und dem zur Kühlung der Brennkraftmaschine (12) erforderlichen Volumenstrom den größeren auswählt und an der Pumpe (14) einstellt, wenn die Sollwertvorgabe (38) einen in der Steuereinheit (22) abgelegten Schwellenwert überschreitet.

4. Verfahren nach Anspruch 2 oder 3, **dadurch gekennzeichnet, dass** die Steuereinheit (22) zwischen dem Mindestvolumenstrom und dem zur Kühlung der Brennkraftmaschine (12) erforderlichen Volumenstrom den größeren erst dann auswählt und an der Pumpe (14) einstellt, wenn die Temperatur des Kühlmittels (42) am Ausgang der Brennkraftmaschine (12) einen in der Steuereinheit (22) abgelegten Schwellenwert überschreitet.

5. Verfahren nach einem der vorhergehenden Ansprüche, **dadurch gekennzeichnet, dass** die Steuereinheit (22) mittels einer Kennlinie den Mindestvolumenstrom in Abhängigkeit der Größe der Sollwertvorgabe (38) ermittelt.

6. Verfahren nach einem der vorhergehenden Ansprüche, **dadurch gekennzeichnet, dass** die Steuereinheit (22) den Mindestvolumenstrom in Abhängigkeit der Größe mindestens eines Betriebs- bzw. Umgebungsparameters (40) bestimmt.

## Claims

1. Method for operating a cooling and heating circuit (10) of a motor vehicle which is driven by an internal combustion engine (12), a first coolant path (28) leading via a bypass line, a second coolant path (30) leading via a main radiator (16) of the internal combustion engine (12), and a third coolant path (32) leading via a heating heat exchanger (20), and the coolant streams being apportioned by means of electrically actuated valves (34, 36) and being determined by means of at least one electrically driven pump (14), in that an electronic control unit (22) activates both the valves (34, 36) and the pump (14) as a function of operating and ambient parameters (40, 42) and desired-value instructions (38), **characterized in that** the control unit (22) sets a higher volume flow at the pump (14) when the driver sets a desired-value instruction (38) for an introduction of heat into the passenger space.

2. Method according to Claim 1, **characterized in that** a value for a minimum volume flow which is required for a comfortable heating of the passenger space is filed in the control unit (22), and **in that**, between the minimum volume flow and the volume flow required for cooling the internal combustion engine (12), the control unit (22) selects the higher and sets it at the pump (14).

3. Method according to Claim 2, **characterized in that**, between the minimum volume flow and the volume flow required for cooling the internal combustion engine (12), the control unit (22) selects the higher and sets it at the pump (14) when the desired-value instruction (38) overshoots the threshold value filed in the control unit (22).

4. Method according to Claim 2 or 3, **characterized in that**, between the minimum volume flow and the volume flow required for cooling the internal combustion engine (12), the control unit (22) selects the higher and sets it at the pump (14) only when the temperature of the coolant (42) at the outlet of the internal combustion engine (12) overshoots the threshold value filed in the control unit (22).

5. Method according to one of the preceding claims, **characterized in that** the control unit (22) determines the minimum volume flow as a function of the magnitude of the desired-value instruction (38) by means of a characteristic curve.

6. Method according to one of the preceding claims, **characterized in that** the control unit (22) determines the minimum volume flow as a function of the magnitude of at least one operating or ambient parameter (40).

## Revendications

1. Procédé de gestion d'un circuit de refroidissement/chauffage (10) d'un véhicule à moteur entraîné par un moteur à combustion interne (12), avec une première voie de liquide de refroidissement (28) passant par une conduite de dérivation, une deuxième voie de liquide de refroidissement (30) passant par un refroidisseur principal (16) du moteur à combustion interne (12) et une troisième voie de liquide de refroidissement (32) passant par un échangeur thermique (20), et dont les débits de liquide de refroidissement sont répartis par des soupapes (34, 36) à commande électrique et déterminés par au moins une pompe à entraînement électrique (14), une unité de commande électronique (22) commandant à la fois les soupapes (34, 36) et la pompe (14) en fonction de paramètres de fonctionnement et d'environnement (40, 42) ainsi que de données de valeur de consigne (38),
**caractérisé ce que**
l'unité de commande (22) règle sur la pompe (14) un débit volumique plus important lorsque le conducteur règle une donnée de valeur de consigne (38) pour un apport thermique dans l'habitacle.

2. Procédé selon la revendication 1,
**caractérisé en ce qu'**
une valeur pour un débit volumique minimum requis pour un chauffage confortable de l'habitacle est enregistrée dans l'unité de commande (22) et l'unité de commande (22) sélectionne entre le débit volumique minimum et le débit volumique requis, le plus grand débit pour le refroidissement du moteur à combustion interne (12) et le règle sur la pompe (14).

3. Procédé selon la revendication 2,
**caractérisé en ce que**
l'unité de commande (22) sélectionne entre le débit volumique minimum et le débit volumique requis le plus grand débit pour le refroidissement du moteur à combustion interne (12) et le règle sur la pompe (14) lorsque la donnée de valeur de consigne (38) dépasse une valeur de seuil enregistrée dans l'unité de commande (22).

4. Procédé selon la revendication 2 ou 3,
**caractérisé en ce que**
l'unité de commande (22) ne sélectionne entre le débit volumique minimum et le débit volumique requis le plus grand débit pour le refroidissement du moteur à combustion interne (12) et ne le règle sur la pompe (14), que si la température du liquide de refroidissement (42) à la sortie du moteur à combustion interne (12) a dépassé une valeur de seuil enregistrée dans l'unité de commande (22).

5. Procédé selon l'une quelconque des revendications précédentes,
**caractérisé en ce que**
l'unité de commande (22) détermine le débit volumique minimum en fonction de la grandeur de la donnée de valeur de consigne (38) à l'aide d'une ligne caractéristique.

6. Procédé selon l'une quelconque des revendications précédentes,
**caractérisé en ce que**
l'unité de commande (22) détermine le débit volumique minimum en fonction de la grandeur d'au moins un paramètre de fonctionnement ou d'environnement (40).
